# EUROPEAN PATENT APPLICATION

(11) **EP 4 556 210 A1**
(43) Date of publication of application: **21.05.2025**
(21) Application number: 23306990.5
(22) Date of filing: 17.11.2023
(51) Int. Cl.: B29D 11/00, B29C 51/14, B29L 11/00

(54) **METHOD FOR THERMOFORMING AN ACTIVE OPTICAL DEVICE INTENDED TO BE PLACED IN OR ON AN OPTICAL ARTICLE**

(71) Applicant: Essilor International, 94220 Charenton-Le-Pont (FR)
(72) Inventor: UHALTE NOGUES, Sira, 94100 Saint-Maur-des-Fossés (FR); LE GUEN, Sophie, 91000 Evry (FR)
(74) Representative: Plasseraud IP

(57) **Abstract**

A method for thermoforming an active optical device intended to be placed in or on an optical article, the method comprising:
- forming a set by:
- providing a first plurality of layers;
- placing the active optical device on the first plurality of layers;
- placing a second plurality of layers on the active optical device, the second plurality of layers symmetrically corresponding to the first plurality of layers according to a same order from the bottom to the top of the set (50),

- thermoforming the set.

## Description

### Technical field

The present disclosure relates to the field of optical articles.

The disclosure concerns more specifically a method for thermoforming an active optical device intended to be placed in or on an optical article.

### Background information and prior art

Optical articles, such as ophthalmic lens, involve the behavior and properties of light, as for example of the visible light. An optical article comprises at least one optical receiving surface and for enhancing the performance of the optical article it is known to provide an active optical element on said receiving surface of the optical article. The active optical element may modify the optical, transmission or mechanical properties of the optical article. For instance, the active optical element may provide a variable polarization or tinting filter.

In such an embodiment, the active optical element is intended to be laminated on the receiving surface of the optical article. Before the lamination step, the active optical element needs to be shaped (thermoformed) with a curvature that complies with the curvature of the receiving surface of the optical article.

In some embodiments, the active optical element is an electrochromic cell.

Low deformation known processes of thermoforming could produce a high unbalanced stress between a front (top) face and a back (bottom) face of the active optical element.

Accordingly, there is the need to provide an innovative method for thermoforming an active optical element which avoids ruptures and defeats after lamination, thus overcoming the problems of the prior art.

### Summary

What is provided herein is a method for thermoforming an active optical device intended to be placed in or on an optical article, the method comprising:
- forming a set by:
   - providing a first plurality of layers;
   - placing the active optical device on the first plurality of layers;
   - placing a second plurality of layers on the active optical device, the second plurality of layers symmetrically corresponding to the first plurality of layers according to a same order from the bottom to the top of the set,
- thermoforming the set.

In an embodiment, the layers of the second plurality of layers correspond one-by-one to the layers of the first plurality of layers according to the order.

In an embodiment, providing the first plurality of layers comprises:
- providing a bottom PET carrier layer;
- placing a bottom sliding PSA layer on the bottom PET carrier layer; and
- placing a bottom silicon layer on the bottom sliding PSA layer.

In an embodiment, providing the first plurality of layers comprises:
- providing a bottom PET carrier layer;
- placing a bottom sliding PSA layer on the bottom PET carrier layer; and
- placing a topcoat layer on the bottom sliding PSA layer.

In an embodiment, placing the second plurality of layers comprises:
- placing a top silicon layer on top of the active optical device;
- placing a top sliding PSA layer on the top silicon layer; and
- placing a final top PET carrier layer on the top sliding PSA layer.

In an embodiment, placing the second plurality of layers comprises:
- placing a topcoat layer on top of the active optical device;
- placing a top sliding PSA layer on the topcoat layer; and
- placing a final top PET carrier layer on the top sliding PSA layer.

In an embodiment, the first plurality of layers and the second plurality of layers are removed from the set.

Also provided herein is an active optical device intended to be included in an optical article, the active optical device being thermoformed by:
- forming a set by:
   - providing a first plurality of layers;
   - placing the active optical device on the first plurality of layers;
   - placing a second plurality of layers on the active optical device, the second plurality of layers symmetrically corresponding to the first plurality of layers according to a same order from the bottom to the top of the set,
- thermoforming the set.

Also provided herein is an optical article including an active optical device, the active optical device being thermoformed by:
- forming a set by:
   - providing a first plurality of layers;
   - placing the active optical device on the first plurality of layers;
   - placing a second plurality of layers on the active optical device, the second plurality of layers symmetrically corresponding to the first plurality of layers according to a same order from the bottom to the top of the set,
- thermoforming the set, the thermoformed active optical device being laminated on a receiving surface of the optical article.

In an embodiment, the layers of the second plurality of layers of the active optical device of the optical article correspond one-by-one to the layers of the first plurality of layers according to the order.

In an embodiment, the optical article is a lens.

In an embodiment, the lens of the optical article is a photochromic lens.

Also provided herein is an eyeglass comprising an optical article, the optical article including an active optical device thermoformed by:
- forming a set by:
   - providing a first plurality of layers;
   - placing the electrochromic cell on the first plurality of layers;
   - placing a second plurality of layers on the electrochromic cell, the second plurality of layers symmetrically corresponding to the first plurality of layers according to a same order from the bottom to the top of the set,
- thermoforming the set, the thermoformed active optical device being laminated on a receiving surface of the optical article.

In an embodiment, the optical article of the eyeglass is a lens.

Also provided herein is a system for thermoforming an active optical device, the system comprising a support and a module for forming a set by placing the active optical device on a first plurality of layers and further placing a second plurality of layers on the active optical device, the system being also configured for thermoforming the set, the second plurality of layers symmetrically corresponding to the first plurality of layers according to a same order from the bottom to the top of the set.

### Description of the drawings

Further characteristics and advantages of the present disclosure will become apparent from the following description, provided merely by way of a non-limiting example, with reference to the attached drawings, in which:
Figure 1 shows a sectional view of a set;
Figure 2 shows the set after a thermoforming step;
Figures 3a-3c show different conditions after lamination of the electrochromic cell on a receiving surface of an optical article;
Figure 4 shows a sectional view of the set obtained according to a method of Figure 5; and
Figure 5 shows the steps of a method for thermoforming an active optical device.

### Detailed description of embodiments

In the description which follows, the drawing figures are not necessarily to scale, and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

As above disclosed, active optical devices can be thermoformed and laminated on the receiving surface of optical articles in order to improve their performances.

To this end one may place the active optical device on a plastic carrier layer, for example in polyethylene terephthalate (PET) and to apply pressure and temperature on the face of the carrier opposed to the active optical device to inflate the carrier layer that pushes onto the active optical device for forming a curved active optical device.

The resulting curvature of the active optical device may be adequate with regard to the targeted curvature.

Electrochromic cells are an example of active optical devices. The electrochromic cells may have, in some embodiments, a structure where an electrochromic material is formed between two facing electrodes, and the space between the electrodes is filled with an electrolyte capable of ion conduction. In an electrochromic cell, reactions are reversely carried out to reversely change a color and are therefore suitable to be applied as an active optical device on the receiving surface of the optical article, to be used for example to change the color of the receiving surface. Electrochromic cells are thermoformed by low deformation process.

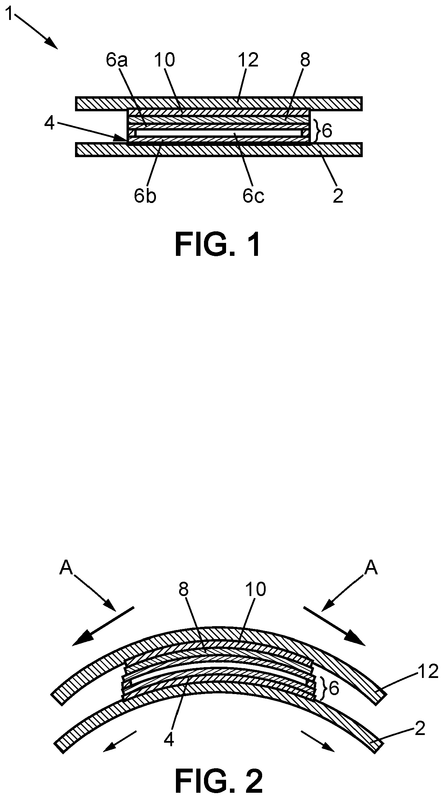

Figure 1 shows a sectional view of a set 1 which comprises a bottom liner layer 2 on which a PSA layer 4 is placed. On top of the PSA layer 4 an electrochromic cell 6 is deposited. The electrochromic cell 6 comprises two facing electrodes 6a, 6b and an electrolyte 6c filling the space between such facing electrodes 6a, 6b.

A silicon layer 8 is then placed on top of the electrochromic cell 6 and a sliding PSA layer 10 is in turn placed on such silicon layer 8. The set 1 also comprise on top a PET carrier layer 12.

Alternatively, the silicon layer 8 is replaced by a topcoat layer. For example, an AR (anti-reflective) layer is applied on the concave side of a lens, instead of the silicon layer 8, such that there is a topcoat layer on the top of the AR stack that allows sliding at the same conditions than the silicon layer 8.

The silicon layer 8 and the sliding PSA layer 10 (or the topcoat layer and the sliding PSA layer 10) can be referred together as sliding stack of the set 1.

To manufacture the electrochromic cell 6, for example a full organic cell to be applied on a surface of an optical article, different processes may be used. One of them comprises a thermoforming step of the set 1, the removing of the thermoformed electrochromic cell 6 from the set 1 and then the application of such thermoformed electrochromic cell 6 on a front surface of an optical article, such as a finished lens.

Figure 2 shows the set 1 of Figure 1 after a thermoforming step where arrows A indicate the direction of such thermoforming.

Even if the stack structure, the sliding PSA layer 10 and the silicon layer 8 allow the front face of the electrochromic cell 6 to slid on the PET carrier layer 12, the front side of the electrochromic cell 6 has a stronger adhesion than the back side, where there are the PSA layer 4 and the liner layer 2. The liner layer 2 is designed to not bond strongly on the PSA layer 4, so, the levels of strength applied during thermoforming at the front and back side of the electrochromic cell 6 are different and both faces could have different levels of deformation.

These different levels of deformation affect the next step of laminating the electrochromic cell 6 on a receiving surface of an optical article.

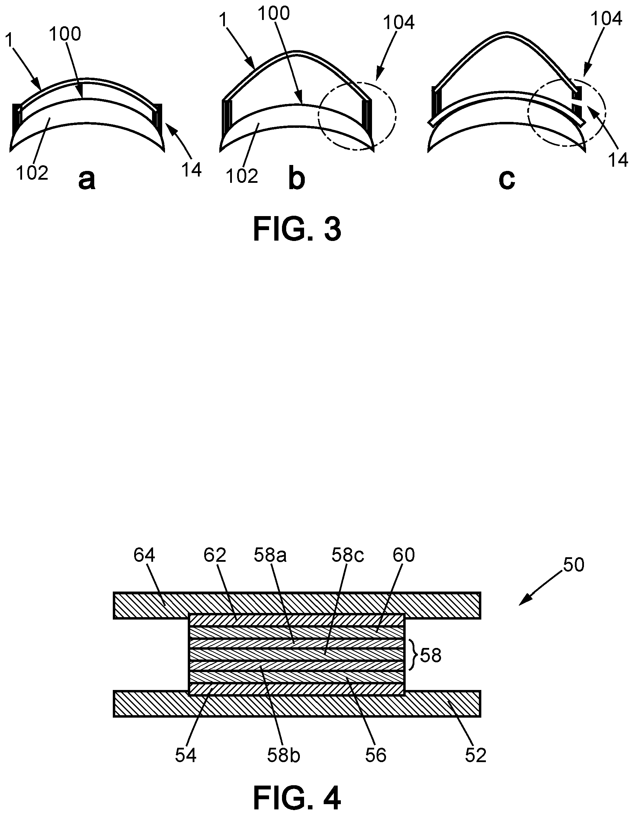

In Figures 3a-3c different conditions after lamination of the electrochromic cell 6 on a receiving surface of an optical article are shown. In particular, in Figure 3a, the electrochromic cell 6, represented for easier comprehension as a single thick curved line, is applied onto a front receiving surface 100 of an optical article 102, for example through glue 14. Figure 3b shows an expanded view of Figure 3a where, due to the different level of deformation suffered by the faces of the electrochromic cell 6, the electrochromic cell 6 acquires a different curvature with respect to the curvature of the receiving surface 100 of the optical article 102 and in area 104 where the glue 14 was applied a stress occurs. In Figure 3c it is shown a rupture in such area 104, where the glue 14 breaks, due to the fact that the seal of the electrochromic cell 6 is too constrained.

In a first-type process, since the electrochromic cell 6 is on the concave side of the PET carrier layer 12, a carrier inversion is needed before thermoforming and laminating the electrochromic cell 6 on the receiving surface 100 of the optical article 102.

In a second-type process, the PET carrier layer 12 carrier is thermoformed on the other side with respect to the first-type process, therefore, the inversion step is not necessary to have the electrochromic cell 6 on the convex side of the PET carrier layer 12.

The above-cited processes allow thermoforming the electrochromic cell 6 without stress problems after lamination until at a level B4 of curvature. Test on optical articles 100 having a level B6 of curvature have been not successfully because the front face of the electrochromic cell 6 delaminates. By changing the parameter process, with the same level of curvature B6, no defect occurs on the laminated electrochromic cell 6 at an initial time just after laminating, however, the electrochromic cell 6 delaminates few minutes later.

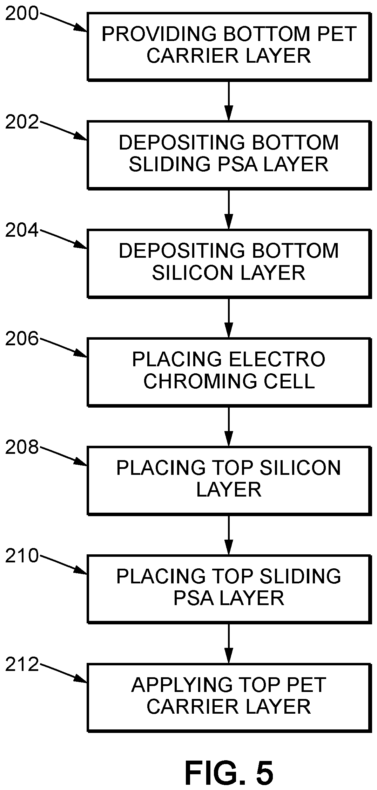

Figure 4 shows a sectional view of a set 50 used in a method for thermoforming an active optical device. The active optical device is for example an electrochromic cell 58. The electrochromic cell 58 may be intended to be used in an optical article. The method for thermoforming is detailed here-below with reference to Figure 5.

The optical article is for example a lens. Advantageously, the lens is incorporated in an eyeglass.

The set 50 comprises a bottom PET carrier layer 52 on which a bottom sliding PSA layer 54 is placed. On top of the bottom sliding PSA layer 54 a bottom silicon layer 56 is deposited and then, in turn, an electrochromic cell 58, which comprises two facing electrodes 58a, 58b and an electrolyte 58c filling the space between such facing electrodes 58a, 58b.

In an alternative embodiment, the bottom silicon layer 56 is replaced by a topcoat layer. For example, to apply an AR (anti-reflective) layer on the concave side of a lens, instead of the bottom silicon layer 56, there is a topcoat layer on the top of the AR stack that allows sliding at the same conditions than the bottom silicon layer 56.

The bottom silicon layer 56 and the sliding PSA layer 54 (or the topcoat layer and the sliding PSA layer 60) can be referred together as sliding stack of the set 50.

A top silicon layer 60 is then placed on top of the electrochromic cell 58 and a top sliding PSA layer 62 is in turn placed on such top silicon layer 60. A final top PET carrier layer 64 is applied on the sliding PSA layer 62, i.e., on top of the set 50.

In an alternative embodiment, the top silicon layer 60 is replaced by a topcoat layer. For example, an AR (anti-reflective) layer is applied on the concave side of a lens, instead of the top silicon layer 60, such that there is a topcoat layer on the top of the AR stack that allows sliding at the same conditions than the top silicon layer 60.

The top silicon layer 60 and the sliding PSA layer 62 (or the topcoat layer and the sliding PSA layer 60) can be referred together as sliding stack of the set 50.

In the set 50 of the present disclosure, the top silicon layer 60 and then the top sliding PSA layer 62 are laminated on the front (top) face of the electrochromic cell 58 before laminating the PET carrier layer 64.

To balance the stress on the electrochromic cell 58, layers identical to the ones present on the front face of the electrochromic cell 58 are also present on the back (bottom) face of such electrochromic cell 58.

In fact, as shown in Figure 4, the bottom silicon layer 56 and the bottom sliding PSA layer 54 are placed under the bottom face of the electrochromic cell 58 and they symmetrically correspond to the top silicon layer 60 and the top sliding PSA layer 62 present on the front face of the electrochromic cell 58.

A double symmetric stack of similar layers is therefore laminated on both faces of the electrochromic cell 58. As a result, the stress which appears when the set 50 is thermoformed is symmetric and after the next step of laminating the electrochromic cell 58 on the receiving surface 100 of the optical article 102, the laminated electrochromic cell 58 does not delaminate anymore.

Figure 5 shows the step of a method for thermoforming the electrochromic cell 58. The thermoformed electrochromic cell 58 may be intended to be place in or on the optical article 102.

In particular, the method comprises the steps of:
- providing a first plurality of layers, i.e., the bottom PET carrier layer 52, the bottom sliding PSA layer 54 and the bottom silicon layer 56;
- placing the electrochromic cell 58 on the fist plurality of layers;
- placing a second plurality of layers, i.e., the top silicon layer 60, the top sliding PSA layer 62 and the top PET carrier layer 64, on the electrochromic cell 58.

The three steps of the previous section allow the formation of the set 50.

The second plurality of layers symmetrically correspond to the first plurality of layers, i.e., the layers of the second plurality of layers correspond, one-by-one, to the layers of the first plurality of layers according to a same order from the bottom to the top of the set 50.

In particular, the method according to the present disclosure comprises a first step 200 wherein the bottom PET carrier layer 52 is provided and then, in a next step 202, the bottom sliding PSA layer 54 is deposited on such bottom PET carrier layer 52. On top of the bottom sliding PSA layer 54, in a next step 204, the bottom silicon layer 56 is deposited and then in turn, in a step 206, the electrochromic cell 58 is placed.

The top silicon layer 60 is then placed, in step 208, on top of the electrochromic cell 58 and then, in step 210, the top sliding PSA layer 62 is in turn placed on such top silicon layer 60. In a final step 212, the final top PET carrier layer 64 is applied on such top sliding PSA layer 62.

Advantageously, a next step of thermoforming the set 50 is performed, in a manner per se known.

Advantageously, a next step of removing the first plurality of layers 52, 54, 56 and the second plurality of layers 60, 62, 64 from the set 50 is performed. This step of removing allows obtaining the thermoformed electrochromic cell 58. The thermoformed electrochromic cell 58 is ready to be incorporated in or on the optical article 102.

Advantageously, a further step of laminating the thermoformed electrochromic cell 58 on the receiving surface 100 of the optical article 102 is performed, in a manner per se known.

The optical article 102 on which the electrochromic cell 58 is laminated is for example a lens.

In the set 50 the layers of the second plurality of layers 60, 62, 64 correspond one-by-one to the layers of the first plurality of layers 52, 54, 56 according to a same order.

The optical article 102 comprising the electrochromic cell 58 can be manufactured by a system for manufacturing an optical article arranged to perform the method for thermoforming the electrochromic cell 58.

The system for manufacturing an optical article comprises a support for hosting the first plurality of layer 52, 54, 56 and an apparatus arranged to place the electrochromic cell 58 on the first plurality of layers 52, 54, 56 and to further place the second plurality of layers 60, 62, 64 on the electrochromic cell 58. This allows forming the set 50.

The apparatus is advantageously further arranged to thermoform the set 50.

The main advantages of the electrochromic cell 58 obtained according to the method of the Figure 5 are:
- the use of the specific symmetric stack of layers above-disclosed, on both faces of the electrochromic cell 58, allows both sides of the electrochromic call 58 to be thermoformed by sliding on carrier layers in similar conditions, therefore, there is no more unbalance of stress;
- the symmetry of the layers in each plurality of layers avoid the necessity, after thermoforming the electrochromic cell 58, to invert the carrier because it is possible to remove the top carrier (convex side) instead of the bottom liner layer usually present in the set 1 of Figure 1, which is usually placed on concave side of the set 1.

Clearly, the principle of the disclosure remaining the same, the embodiments and details of production can be varied considerably from what has been described and illustrated purely by way of non-limiting example, without departing from the scope of protection of the present as defined in the attached claims.

## Claims

1. A method for thermoforming an active optical device (58) intended to be placed in or on an optical article (102), the method comprising:
- forming a set (50) by:
- providing (200, 202, 204) a first plurality of layers (52, 54, 56);
- placing (206) the active optical device (58) on the first plurality of layers (52, 54, 56);
- placing (208, 210, 212) a second plurality of layers (60, 62, 64) on the active optical device (58), the second plurality of layers (60, 62, 64) symmetrically corresponding to the first plurality of layers (52, 54, 56) according to a same order from the bottom to the top of the set (50),
- thermoforming the set (50).

2. The method according to claim 1, wherein the layers of the second plurality of layers (60, 62, 64) correspond one-by-one to the layers of the first plurality of layers (52, 54, 56) according to the order.

3. The method according to claim 1 or 2, wherein providing (200, 202, 204) the first plurality of layers (52, 54, 56) comprises:
- providing (200) a bottom PET carrier layer (52);
- placing (202) a bottom sliding PSA layer (54) on the bottom PET carrier layer (52); and
- placing (204) a bottom silicon layer (56) on the bottom sliding PSA layer (54).

4. The method according to claim 1 or 2, wherein providing (200, 202, 204) the first plurality of layers (52, 54, 56) comprises:
- providing (200) a bottom PET carrier layer (52);
- placing (202) a bottom sliding PSA layer (54) on the bottom PET carrier layer (52); and
- placing (204) a topcoat layer (56) on the bottom sliding PSA layer (54).

5. The method according to any of the preceding claims, wherein placing (208, 210, 212) the second plurality of layers (60, 62, 64) comprises:
- placing (208) a top silicon layer (60) on top of the active optical device (58);
- placing (210) a top sliding PSA layer (62) on the top silicon layer (60); and
- placing (212) a final top PET carrier layer (64) on the top sliding PSA layer (62).

6. The method according to any of the claims 1 to 4, wherein placing (208, 210, 212) the second plurality of layers (60, 62, 64) comprises:
- placing (208) a topcoat layer (60) on top of the active optical device (58);
- placing (210) a top sliding PSA layer (62) on the topcoat layer (60); and
- placing (212) a final top PET carrier layer (64) on the top sliding PSA layer (62).

7. The method according to any of the preceding claims, further comprising removing the first plurality of layers (52, 54, 56) and the second plurality of layers (60, 62, 64) from the set (50).

8. An active optical device (58) intended to be included in an optical article (102), the active optical device (58) being thermoformed by:
- forming a set (50) by:
- providing (200, 202, 204) a first plurality of layers (52, 54, 56);
- placing (206) the active optical device (58) on the first plurality of layers (52, 54, 56);
- placing (208, 210, 212) a second plurality of layers (60, 62, 64) on the active optical device (58), the second plurality of layers (60, 62, 64) symmetrically corresponding to the first plurality of layers (52, 54, 56) according to a same order from the bottom to the top of the set (50),
- thermoforming the set (50).

9. An optical article (102) including an active optical device (58),
the active optical device (58) being thermoformed by:
- forming a set (50) by:
- providing (200, 202, 204) a first plurality of layers (52, 54, 56);
- placing (206) the active optical device (58) on the first plurality of layers (52, 54, 56);
- placing (208, 210, 212) a second plurality of layers (60, 62, 64) on the active optical device (58), the second plurality of layers (60, 62, 64) symmetrically corresponding to the first plurality of layers (52, 54, 56) according to a same order from the bottom to the top of the set (50),
- thermoforming the set (50),
the thermoformed active optical device (58) being laminated on a receiving surface (100) of the optical article (102).

10. The optical article (102) according to claim 9, wherein the layers of the second plurality of layers (60, 62, 64) correspond one-by-one to the layers of the first plurality of layers (52, 54, 56) according to the order.

11. The optical article (102) according to claim 9 or 10, wherein the optical article (102) is a lens.

12. The optical article (102) according to claim 11, wherein the lens is a photochromic lens.

13. An eyeglass comprising an optical article (102), the optical article (102) including an active optical device (58),
the active optical device (58) being thermoformed by:
- forming a set (50) by:
- providing (200, 202, 204) a first plurality of layers (52, 54, 56);
- placing (206) the electrochromic cell (58) on the first plurality of layers (52, 54, 56);
- placing (208, 210, 212) a second plurality of layers (60, 62, 64) on the electrochromic cell (58), the second plurality of layers (60, 62, 64) symmetrically corresponding to the first plurality of layers (52, 54, 56) according to a same order from the bottom to the top of the set (50),
- thermoforming the set (50),
the thermoformed active optical device (58) being laminated on a receiving surface (100) of the optical article (102).

14. The eyeglass according to claim 13, wherein the optical article (102) is a lens.

15. A system for thermoforming an active optical device (58)
the system comprising a support and a module for forming a set (50) by placing the active optical device (58) on a first plurality of layers (52, 54, 56) and further placing a second plurality of layers (60, 62, 64) on the active optical device (58),
the system being also configured for thermoforming the set (50),
the second plurality of layers (60, 62, 64) symmetrically corresponding to the first plurality of layers (52, 54, 56) according to a same order from the bottom to the top of the set (50).
